## Europäisches Patentamt

## European Patent Office

## Office européen des brevets

(19)

(11) Veröffentlichungsnummer: **0 218 707 B1**

# EUROPÄISCHE PATENTSCHRIFT

(12)

(45) Veröffentlichungstag der Patentschrift: **24.06.92**

(51) Int. Cl.⁵: **G01N 27/417**

(21) Anmeldenummer: **86902816.7**

(22) Anmeldetag: **15.04.86**

(86) Internationale Anmeldenummer:
**PCT/EP86/00217**

(87) Internationale Veröffentlichungsnummer:
**WO 86/06168 (23.10.86 86/23)**

(54) **ELEKTROCHEMISCHER MESSFÜHLER.**

(30) Priorität: **17.04.85 DE 3513761**
**17.04.85 DE 8511312 U**

(43) Veröffentlichungstag der Anmeldung:
**22.04.87 Patentblatt 87/17**

(45) Bekanntmachung des Hinweises auf die
Patenterteilung:
**24.06.92 Patentblatt 92/26**

(84) Benannte Vertragsstaaten:
**AT BE CH DE FR GB IT LI NL SE**

(56) Entgegenhaltungen:
**EP-A- 0 019 731**      **EP-A- 0 020 938**
**WO-A-84/04816**      **DE-A- 2 304 464**
**DE-A- 2 526 340**      **DE-A- 2 656 648**
**US-A- 4 145 272**

**See also references of WO8606168**

(73) Patentinhaber: **Bayer Diagnostic GmbH**
**Weissenseestrasse 101**
**W-8000 München 90(DE)**

(72) Erfinder: **WAGNER, Ingeborg**
**Buchleiten 1**
**8184 Gmund a.Tegernsee(DE)**
Erfinder: **SCHMIDTPOTT, Hermann**
**Eugen-Papst-Str. 10**
**W-8034 Germering(DE)**

(74) Vertreter: **Kirchner, Dietrich, Dr.**
**c/o BAYER AG Konzernverwaltung RP Patentabteilung**
**W-5090 Leverkusen, Bayerwerk(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung geht aus von einem elektrochemischen Meßfühler zum Nachweis von Stickoxiden mit wenigstens zwei Elektroden, einem Festelektrolyten und einer Diffusionsbarriere.

Aus der DE-OS 23 04 464 ist ein Meßfühler für die Überwachung der Funktionsfähigkeit von Katalysatoren in Abgasentgiftungsanlagen von Brennkraftmaschinen bekannt. Der Meßfühler besteht aus einer Sauerstoff-Sonde, auch λ-Sonde genannt. Im Falle, daß der Katalysator vergiftet ist oder aus anderen, etwa Altersgründen, seine Funktion nicht mehr oder nicht mehr ausreichend erfüllt, Kohlenwasserstoffe, Kohlenmonoxid oder Stickoxide zu oxidieren bzw. reduzieren, wird in Strömungsrichtung hinter dem Katalysator eine höhere Sauerstoffkonzentration auftreten, da der Sauerstoff in diesem Falle durch den Katalysator nicht verbraucht wird. Bei der bekannten Anordnung ist der Meßfühler hinter dem Katalysator angeordnet und mißt den vom Katalysator noch abgegebenen Sauerstoff. Bei Erreichen eines bestimmten, vorgegebenen Meßwerts wird dann ein Signal ausgelöst, das einen Hinweis darauf gibt, daß der Katalysator nicht mehr oder nicht mehr ausreichend wirksam ist.

Die Fähigkeit des Katalysators, Kohlenwasserstoffe, Kohlenmonoxid und die Stickstoffoxide durch Oxidation in weniger schädliche Gase umzusetzen, wird mit der bekannten Vorrichtung nicht direkt, sondern indirekt durch die Messung des hinter dem Katalysator noch auftretenden Sauerstoffs ermittelt. Diese Methode ist sehr ungenau und für den praktischen Einsatz nicht geeignet, da die Sauerstoffkonzentration hinter dem Katalysator nicht nur von der Funktionsfähigkeit des Katalysators selbst, sondern auch von der Arbeitsweise des Motors in den verschiedenen Belastungsbereichen abhängt. Außerdem kann die Messung der Sauerstoffkonzentration hinter dem Katalysator nicht zur Bewertung der Funktionsfähigkeit des Katalysators herangezogen werden, weil dieser Meßwert kein Maß für die Stickoxidkonzentration nach dem Katalysator ist. Mit der bekannten Vorrichtung ist daher die sichere Funktionsüberwachung eines Katalysators nicht möglich.

Aus der DE-OS 23 35 402 ist ein Sensor zur elektrochemischen Bestimmung des Gehalts an Stickoxiden in Abgasen bekannt, der u.a. auch dazu dient, die Funktion eines Abgaskatalysators zu überwachen. Der bekannte Sensor ist in einer Bypass-Leitung zum eigentlichen Auspuffrohr angeordnet und die Temperatur dieses bekannten Sensors darf aufgrund seines Aufbaus und beispielsweise der Verwendung von Teflon als Diffusionsbarriere höchstens 70° C betragen.

Der Nachteil dieser Anordnung besteht insbesondere darin, daß der Stickoxidanteil im Auspuffgas nicht hinter dem Katalysator sondern in einer Bypass-Leitung gemessen wird. Hinter dem Katalysator herrscht an der Auspuffanlage bzw. in den Auspuffgasen eine Temperatur von wenigstens 400° C. Dieser Temperatur ist der bekannte Sensor bei weitem nicht gewachsen. Deshalb muß der Sensor in einer Bypass-Leitung zusätzlich gekühlt werden, so daß zusätzlicher Aufwand erforderlich ist. Außerdem ist es möglich, daß die Bypass-Leitung absichtlich oder unabsichtlich geschlossen wird und damit keine sichere Überwachung des Katalysators möglich ist.

Es gibt zwar physikalische Analysemethoden, mit denen Stickoxide, Kohlenwasserstoffe und/oder Kohlenmonoxid bei Temperaturen von 400° C gemessen werden können. Eingesetzt werden hierfür Flammen-Ionisationsdetektoren, Infrarot-Analysatoren und/oder Chemolumineszens-Meßgeräte, die jedoch ausnahmslos einen hohen apparativen Aufwand erfordern und für den Einbau in Auspuffanlagen sowohl hinsichtlich des Aufwandes, als auch hinsichtlich des Platzbedarfs, der mechanischen Belastbarkeit usw. indiskutabel sind.

Darüber hinaus wird in DE-A 25 26 340 ein elektrochemischer Sensor zur Messung des Brennstoff/Luftverhältnisses in Gasgemischen beschrieben, der einen Feststoffelektrolyt in Form einer Scheibe aufweist, auf deren Oberfläche an verschiedenen dem zu untersuchenden Gasgemisch ausgesetzten Stellen die Elektroden angeordnet sind. Als Elektrolyt werden Zirkon- oder Cermischoxide verwendet. Dieser Abgassensor kann direkt in den Abgasstrom eingebaut werden und zeigt Luftüberschuß oder Luftmangel der Verbrennungsgase an. Als Schwerpunkt wird bei diesem Sensor der geringe Herstellungsaufwand und die direkte Bestimmung des stöchiometrischen Verhältnisses von Luft zu Brennstoff angesehen.

Desweiteren ist aus EP-A 20 938 ein polarographischer Meßfühler für die Bestimmung des Sauerstoffgehaltes in Gasen, insbesondere in Abgasen von Verbrennungsmotoren, bekannt. Der Sensor arbeitet nach dem Diffusions Grenzstromprinzip und zeichnet sich durch einen speziellen planaren Aufbau aus. Dieser Aufbau besteht im wesentlichen darin, daß auf der Kathode Stützen aufliegen, die ein System von Zwischenräumen bilden, die über langgestreckte Kanäle mit dem sauerstoffhaltigen Gas in Verbindung stehen. Der Elektrolyt besteht in diesem Fall aus stabilisiertem Zirkonoxid. Die Zielsetzung liegt in einer Verbesserung der Ansprechzeit bei einem Konzentrationswechsel des Sauerstoffgehaltes.

Der Erfindung liegt die Aufgabe zugrunde, einen elektrochemischen Meßfühler insbesondere für Stickoxide als Leitkomponente von Abgasen, aber auch für Kohlenmonoxid und/oder Kohlenwasserstoffe zu schaffen, der auch bei höchsten Arbeitstemperaturen noch einwandfrei arbeitet, sowohl hinsichtlich der Abmessungen als auch der mechanischen Belastbarkeit, also der Kompaktheit und Rüttelfestigkeit für den Einbau in Kraftfahrzeugen geeignet ist, kostengünstig hergestellt werden kann und über einen weiten Temperaturbereich von etwa -50°C bis +500°C sicher arbeitet und im wesentlichen unabhängig von der Motorbelastung bzw. dem Verbrennungsgrad im Motor ist.

Diese Aufgabe wird durch einen elektrochemischen Meßfühler mit wenigstens zwei Elektroden, einer Diffusionsbarriere und einem Festelektrolyten gelöst, der erfindungsgemäß aus wenigstens einer oder aus einem Gemisch von Verbindungen der Spinelle oder Heteropolysäuren besteht und im Temperaturbereich von -50°C bis +500°C keine Phasenänderungen aufweist und bei dem die Diffusionsbarriere aus einem porösen Metall besteht.

Durch die Tatsache, daß bei dem erfindungsgemäßen elektrochemischen Meßfühler ein spezieller Festelektrolyt vorgesehen ist und die Diffusionsbarriere aus porösem Metall besteht, und wegen der Möglichkeit, den Meßfühler hinter dem Katalysator in der Abgasleitung anzuordnen, ergibt sich eine sichere Bestimmung der vom Katalysator nicht umgesetzten Abgaskomponente. Als Leitkomponente werden normalerweise die Stickoxide herangezogen, es können jedoch auch die Kohlenwasserstoffe oder das Kohlenmonoxid mit dem erfindungsgemäßen Meßfühler bestimmt werden, um eine sichere Funktionsüberwachung des Katalysators zu erzielen. Dadurch ergibt sich eine kontinuierliche Katalysatorüberwachung, die insbesondere auch unabhängig vom Sauerstoffanteil in den Auspuffgasen ist. Darüber hinaus hängt die Bestimmung der Abgaskomponente im wesentlichen nicht von der unterschiedlichen Belastung des Motors ab, die sich in schneller Folge ändert, wenn aus dem Leerlauf in dem Anfahrbereich und von dort beispielsweise bei einem Überholmanöver oder auf der Autobahnfahrt in einen hohen Belastungsbereich übergegangen wird.

Der erfindungsgemäße Meßfühler ist insbesondere mechanisch stark belastbar, was aufgrund der Fahrzeugerschütterungen und der Gasvibrationen für den Einbau in Kfz-Auspuffanlagen aber auch bei Auspuffanlagen für stationäre Systeme unabdingbar ist. Darüber hinaus sind die erfindungsgemäßen Meßfühler hinsichtlich des Aufbaus und der Herstellungsweise einfach und damit kostengünstig. Ein weiterer Vorteil der erfindungsgemäßen Meßfühler besteht darin, daß sie gegen Wasserdampf und Benzin vergiftungssicher sind. Wird der erfindungsgemäße Meßfühler zur Messung von Stickoxiden eingesetzt, weist er keine wesentlichen Querempfindlichkeiten gegenüber Kohlenmonoxid, Kohlendioxid, Schwefeloxiden oder Wasserstoff auf.

Gemäß einer bevorzugten Ausführungsform der vorliegenden Erfindung ist die Diffusionsbarriere als poröse Schicht des die Arbeitselektrode bildenden Metalls ausgebildet. Dies hat den Vorteil, daß die Haftung der porösen Schicht über eine massive Schicht aus gleichem Material an der Unterlage wesentlich besser ist, als die Haftung der porösen Schicht direkt an der Unterlage.

Darüber hinaus ist auch der Leitungsanschluß sicherer und einfacher.

Je nach den vorliegenden Bedingungen, Erfordernissen und der Wahl der Materialien, Elektrolyten usw. kann auch eine zusätzliche Referenzelektrode vorgesehen sein. In diesem Falle kann die Arbeits- und Gegenelektrode, d.h. die Kathode und die Anode aus demselben Material bestehen. Im Falle, daß bei einer alternativen Ausführungsform die Gegenelektrode gleichzeitig als Referenzelektrode dient, besteht die Gegenelektrode aus einem anderen Material als die Arbeitselektrode.

Als Festelektrolyt wird vorzugsweise eine Verbindung oder ein Verbindungsgemisch verwendet, die bzw. das im gesamten Temperatur-Arbeitsbereich von -50°C bis +500°C eine Leitfähigkeit von wenigstens $10^{-11}$ Ohm/cm aufweist, um sicherzustellen, daß der Meßfühler ein zur Weiterverarbeitung ausreichend hohes Signal abgibt.

Als Festelektrolyten vom Typ der Heteropolysäuren sind z.B. Hydrogen-Uranyl-Phosphat, Wolframatophosphorsäure und Molydatophosphorsäure besonders vorteilhaft. Die Spinelle und die Heteropolysäuren sind insbesondere wegen ihrer thermischen Stabilität und der konstanten Leitfähigkeit über einen weiten Temperaturbereich hinweg besonders geeignet.

Die Gegenelektrode besteht vorzugsweise aus wenigstens einem der Materialien Platin, Palladium, Rhodium, Silber und/oder Ruthenium-Oxid.

Die erfindungsgemäßen Meßfühler weisen eine große Selektivität hinsichtlich der zu messenden Abgaskomponente auf und sind in hohem Maße vergiftungssicher. Darüber hinaus sind die Meßwerte gut reproduzierbar. Der thermische Einsatzbereich dieser Meßfühler reicht von -50°C bis 500°C.

Gemäß einer bevorzugten Ausführungsform der Erfindung ist der erfindungsgemäße Meßfühler so hergestellt, daß die aus porösem Metall bestehende Diffusionsbarriere mittels einer Metallpaste gebildet ist, der feinverteiltes Material, beispielsweise Polystyrol oder andere Treibmittel beigemengt ist, das bei höheren Temperaturen verdampft. Wird die Metallpaste "ausgebacken", verdampft das beigegebene Material und es ergibt sich die Porosität durch die gewollte Lunkerbildung. Vorzugsweise wird die Metallpaste bei diesem Herstellvorgang im Siebdruckverfahren aufgebracht. Es ist auch vorteilhaft, die Diffusionsbarriere durch Sputtern auszubilden, wobei die Porengröße bzw. die Kanalgröße von der Sputtertemperatur und/oder dem Maß des Unterdrucks in der Sputterkammer abhängt und dadurch eingestellt werden kann. Diese Technik ist an sich bekannt.

Das Sensorsignal wird vorzugsweise derart ausgewertet, daß ein Signal in irgendeiner Form, beispielsweise ein optisches oder akustisches Signal, erzeugt wird, wenn das Sensorsignal einen einstellbaren und/oder vorgegebenen Signalwert überschreitet. Das bedeutet, falls eine höhere Konzentration der zu messenden Abgaskomponente, vorzugsweise der Stickoxid-Komponente hinter dem Katalysator austritt, wird dadurch ein Hinweis auf die nicht mehr ausreichende Funktionsfähigkeit des Katalysators, beispielsweise bei plötzlicher Kontamination oder bei allmählichem Altern des Katalysators, gegeben. Der Kraftfahrzeughalter wird auf diese Weise auf diesen Sachverhalt aufmerksam gemacht und darauf hingewiesen, daß er den Katalysator auszuwechseln hat.

Die Erfindung wird nachfolgend anhand eines Ausführungsbeispiels erläutert. Es zeigen:

Figur 1 eine schematische Querschnittsdarstellung einer Ausführungsform des Meßfühlers entlang der in Figur 2 eingezeichneten Schnittlinie A-A und

Figur 2 eine schematische Darstellung des Meßfühlers in Aufsicht.

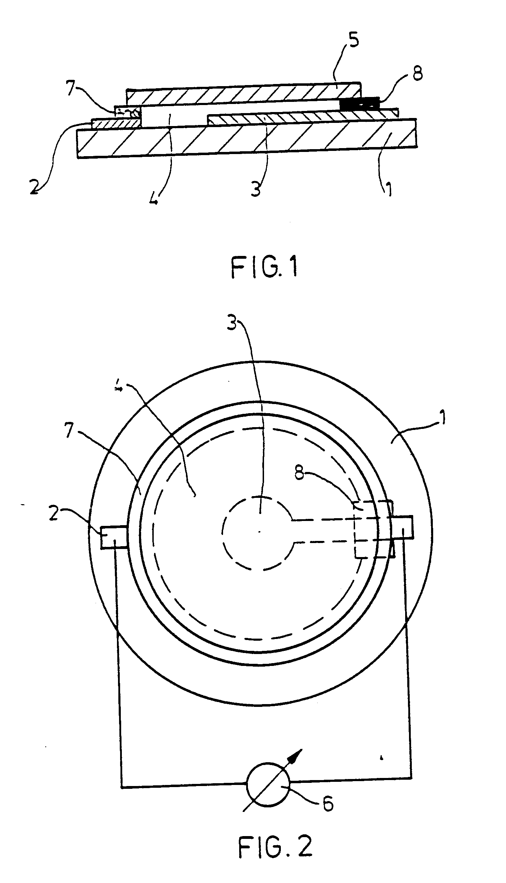

Die Figuren 1 und 2 zeigen ein Substrat 1, beispielsweise eine Keramikplatte, eine Aluminiumoxid-Platte oder eine vorbehandelte Metallplatte, auf der eine als Arbeitselektrode wirkende Kathode 2, und in einem Abstand davon die Gegenelektrode 3 als Anode aufgebracht ist. Die Arbeitselektrode 2 besteht wenigstens teilweise aus einem als Diffusionsbarriere 7 dienenden, porösen Metall, beispielsweise porösem Gold, das in der erwähnten Weise auf das Substrat 1 aufgebracht wurde. Die zu messende Abgaskomponente, beispielsweise Stickoxid, diffundiert durch die als Diffusionsbarriere 7 wirkende Arbeitselektrode 2 an den Bereich der Oberfläche der Arbeitselektrode 2, der mit einem Festelektrolyten 4 in Kontakt steht und mit einer Isolationsschicht 8 von der Arbeitselektrode 2 getrennt ist. Die bei der Reduktion der Stickoxide frei werdenden Elektronen wandern durch den leitfähigen Elektrolyten 4 zur Gegenelektrode 3, so daß der dadurch entstehende Strom durch eine Meßeinrichtung 6 gemessen werden kann. Dieser gemessene Strom wird zur Signalgabe herangezogen, wenn die Stickoxidkonzentration einen bestimmten Wert übersteigt.

Das Gesamtgebilde ist von einer Schutz- und Isolationsschicht 5 überzogen.

Für besondere Anwendungsfälle ist es insbesondere vorteilhaft, den beschriebenen Meßfühler in derselben Anordnung auch auf der anderen Seite des Substrats 1 in derselben Weise, d.h. klappsymmetrisch, vorzusehen. Im Anwendungsfall wird die eine Seite dem zu messenden Gas und die andere, identisch aufgebaute Seite einem Referenzgas ausgesetzt.

Der erfindungsgemäße Meßfühler kann auf einfache und kostengünstige Weise in Streich- oder Dickschichttechnik hergestellt werden. Es ergibt sich dadurch ein Meßfühler mit kleinen auch für den nachträglichen Einbau bei Auspuffanlagen geeigneten Abmessungen. Darüber hinaus ist der auf diese Weise hergestellte Sensor in hohem Maße vibrationsunempfindlich.

Die Erfindung wurde anhand eines Ausführungsbeispiels beschrieben. Dem Fachmann sind zahlreiche Abwandlungen und Ausgestaltungen der Erfindung möglich, ohne daß dadurch der Erfindungsgedanke verlassen wird. Beispielsweise kann in einer Baueinheit mit dem eigentlichen Meßfühler - gegebenenfalls durch eine Wärmesperre von diesem getrennt - eine integrierte Auswerteschaltung etwa in Hybridtechnik vorgesehen sein, so daß sich ein kompaktes, kleine Abmessungen aufweisendes, integrales Bauteil ergibt, das auf einfache Weise etwa an einen an der Auspuffleitung in Strömungsrichtung nach dem Katalysator ausgebildeten Anschlußstutzen mittels einer Schraubverbindung jederzeit auch von Nichtfachleuten angebracht bzw. ausgewechselt werden kann.

## Patentansprüche

1. Elektrochemischer Meßfühler zum Nachweis von Stickoxiden mit wenigstens zwei Elektroden (2,3), einem Elektrolyten und einer Diffusionsbarriere (7), wobei der Elektrolyt als Festelektrolyt (4) ausgebildet ist, dadurch gekennzeichnet, daß der Festelektrolyt aus wenigstens einer oder aus einem Gemisch von Verbindungen der Spinelle oder Heteropolysäuren besteht und im Temperaturbereich von -50° C bis +500° C keine Phasenänderungen aufweist und daß die Diffusionsbarriere aus einem porösen Metall besteht.

2. Meßfühler nach Anspruch 1, dadurch gekennzeichnet, daß die Diffusionsbarriere (7) als poröse Schicht des die Arbeitselektrode (2) bildenden Metalls ausgebildet ist.

3. Meßfühler nach einem der Ansprüche 1 bis 2, dadurch gekennzeichnet, daß die Gegenelektrode auch als Referenzelektrode dient.

4. Meßfühler nach einem der Ansprüche 1 bis 3, dadurch gekennzeichnet, daß bei Verwendung einer zusätzlichen Referenzelektrode die Arbeits- und Gegenelektrode aus demselben Material besteht.

5. Meßfühler nach Anspruch 1 bis 4, dadurch gekennzeichnet, daß die Arbeitselektrode aus einem anderen Material als die Gegenelektrode besteht.

6. Meßfühler nach einem der Ansprüche 1 bis 5, dadurch gekennzeichnet, daß der Festelektrolyt aus wenigstens einer oder einem Gemisch von Verbindungen besteht, die bzw. das in einem Temperaturbereich von -50°C bis +500°C eine Leitfähigkeit von wenigstens $10^{-11}$ Ohm–$^1$cm$^{-1}$ aufweist.

7. Meßfühler nach wenigstens einem der Ansprüche 1 bis 6, dadurch gekennzeichnet, daß die Gegenelektrode aus wenigstens einem der Materialien Platin, Palladium, Rhodium, Silber und/oder Ruthenium-Oxid besteht.

8. Meßfühler nach einem der Ansprüche 1 bis 7, dadurch gekennzeichnet, daß die aus porösem Material bestehende Diffusionsbarriere aus einer Metallpaste gebildet ist, der feinverteiltes, bei höheren Temperaturen verdampfendes Material beigegeben ist, und die nach Aufbringen auf ein Substrat auf eine Temperatur gebracht wird, bei der das beigegebene Material verdampft.

9. Meßfühler nach Anspruch 8, dadurch gekennzeichnet, daß die Metallpaste im Siebdruckverfahren aufgebracht ist.

10. Meßfühler nach Anspruch 8 oder 9, dadurch gekennzeichnet, daß das beigegebene Material ein Treibmittel ist.

11. Meßfühler nach einem der Ansprüche 8 bis 10, dadurch gekennzeichnet, daß das beigegebene Material Polystyrol ist.

12. Meßfühler nach einem der Ansprüche 1 bis 11, dadurch gekennzeichnet, daß die Diffusionsbarriere durch Sputter-Technik gebildet ist.

13. Meßfühler nach einem der Ansprüche 1 bis 12, dadurch gekennzeichnet, daß der Meßfühler aus zwei im wesentlichen identischen Sensorelementen besteht, wobei das eine Element den Abgasen und das andere Element einem Referenzgas ausgesetzt ist.

## Claims

1. An electrochemical sensor for detecting nitrogen oxides comprising at least two electrodes (2, 3), an electrolyte and a diffusion barrier (7), wherein the electrolyte has the form of a solid electrolyte (4), characterised in that the solid electrolyte comprises at least one compound or a mixture of compounds of spinels or heteropoly acids and exhibits no changes in phase in the temperature range from -50°C to +500°C, and that the diffusion barrier is composed of a porous metal.

2. A sensor as claimed in Claim 1, characterised in that the diffusion barrier (7) has the form of a porous layer of the metal of which the working electrode (2) is composed.

3. A sensor as claimed in one of Claims 1 to 2, characterised in that the counter-electrode also serves as reference electrode.

4. A sensor as claimed in one of Claims 1 to 3, characterised in that when an additional reference electrode is used, the working electrode and counter-electrode are composed of the same material.

5. A sensor as claimed in Claims 1 to 4, characterised in that the working electrode is composed of a different material to the counter-electrode.

6. A sensor as claimed in one of Claims 1 to 5, characterised in that the solid electrolyte is composed of at least one compound or a mixture of compounds possessing a conductivity of at least $10^{-11}$ Ohm$^{-1}$cm$^{-1}$ in a temperature range of -50°C to +500°C.

7. A sensor as claimed in at least one of Claims 1 to 6, characterised in that the counter-electrode is composed of at least one of the materials comprising platinum, palladium, rhodium, silver and/or ruthenium oxide.

8. A sensor as claimed in one of Claims 1 to 7, characterised in that the diffusion barrier composed of porous material is formed by a metal paste to which is added finely distributed material which vaporizes at higher temperatures, which metal paste, following application onto a substrate, is brought to a temperature at which the added material vaporizes.

9. A sensor as claimed in Claim 8, characterised in that the metal paste is applied by a silk screen process.

10. A sensor as claimed in Claim 8 or 9, characterised in that the added material is a foaming agent.

11. A sensor as claimed in one of Claims 8 to 10, characterised in that the added material is polystyrene.

12. A sensor as claimed in one of Claims 1 to 11, characterised in that the diffusion barrier is formed by sputtering.

13. A sensor as claimed in one of Claims 1 to 12, characterised in that the sensor comprises two substantially identical sensor elements, of which one element is exposed to the exhaust gases and the other element is exposed to a reference gas.

**Revendications**

1. Détecteur électrochimique de mise en évidence d'oxydes d'azote comportant au moins deux électrodes (2, 3), un électrolyte et une barrière de diffusion (7), l'électrolyte ayant la forme d'un électrolyte solide (4), caractérisé en ce que l'électrolyte solide est composé d'au moins un composé ou d'un mélange de composés des spinelles ou des hétéropolyacides et ne présente pas de modifications de phases dans la plage de températures de -50°C à +500°C et que la barrière de diffusion est en un métal poreux.

2. Détecteur selon la revendication 1, caractérisé en ce que la barrière de diffusion (7) est formée par une couche poreuse du métal formant l'électrode active (2).

3. Détecteur selon une des revendications 1 à 2, caractérisé en ce que la contre-électrode sert également d'électrode de référence.

4. Détecteur selon une des revendications 1 à 3, caractérisé en ce que l'électrode active et la contre-électrode sont faites du même matériau lors de l'emploi d'une électrode de référence additionnelle.

5. Détecteur selon les revendications 1 à 4, caractérisé en ce que l'électrode active est en un matériau différent de la contre-électrode.

6. Détecteur selon l'une des revendications 1 à 5, caractérisé en ce que l'électrolyte solide est fait d'au moins un composé ou un mélange de composés présentant une conductibilité d'au moins $10^{-11}$ Ohm$^{-1}$cm$^{-1}$ dans une plage de températures allant de -50°C à +500°C.

7. Détecteur selon au moins une des revendications 1 à 6, caractérisé en ce que la contre-électrode est en au moins un des matériaux platine, palladium, rhodium, argent et/ou oxyde de ruthénium.

8. Détecteur selon l'une des revendications 1 à 7, caractérisé en ce que la barrière de diffusion en matériau poreux est formée par une pâte métallique à laquelle est ajoutée une substance finement divisée, s'évaporant à des températures relativement élevées et qui, après dépôt sur un substrat, est amené à une température à laquelle la substance ajoutée s'évapore.

9. Détecteur selon la revendication 8, caractérisé en ce que la pâte métallique est déposée par sérigraphie.

10. Détecteur selon la revendication 8 ou 9, caractérisé en ce que la substance ajoutée est un agent gonflant.

11. Détecteur selon une des revendications 8 à 10, caractérisé en ce que la substance ajoutée est du polystyrène.

12. Détecteur selon une des revendications 1 à 11, caractérisé en ce que la barrière de diffusion est formée par pulvérisation cathodique.

13. Détecteur selon une des revendications 1 à 12, caractérisé en ce que le détecteur est composé de deux éléments capteurs sensiblement identiques, un des éléments étant exposé aux gaz d'échappement et l'autre élément à un gaz de référence.

FIG.1

FIG. 2